# EUROPEAN PATENT APPLICATION

(11) **EP 4 339 314 A1**
(43) Date of publication of application: **20.03.2024**
(21) Application number: 23157246.2
(22) Date of filing: 17.02.2023
(51) Int. Cl.: C22B 7/00, C22B 34/00, H01M 4/13, H01M 10/54, C01G 33/00, C22B 3/02, C22B 3/06, C22B 3/08, C22B 34/12, C22B 34/24

(54) **RECYCLING SYSTEM, RECYCLING METHOD, METHOD FOR MANUFACTURING ELECTRODE, AND METHOD FOR MANUFACTURING BATTERY**

(30) Priority: 16.09.2022 JP 2022148139; 26.01.2023 JP 2023010520
(71) Applicant: KABUSHIKI KAISHA TOSHIBA, Minato-ku Tokyo 105-0023 (JP)
(72) Inventor: Fukaya, Taro, Tokyo, 105-0023 (JP); Kondo, Asato, Tokyo, 105-0023 (JP); Harada, Yasuhiro, Tokyo, 105-0023 (JP)
(74) Representative: Hoffmann Eitle

(57) **Abstract**

In general, according to one approach, a recycling method is provided. The method includes dispersing (S1) an electrode containing a niobium titanium oxide in water; separating (S2) the niobium titanium oxide from the electrode dispersed in the water; and applying (S3) a first heat treatment to the separated niobium titanium oxide.

## Description

### FIELD

Disclosure relate to a recycling system, a recycling method, a method for manufacturing an electrode, and a method for manufacturing a battery.

### BACKGROUND

In a lithium ion secondary battery, a lithiumcontaining metal oxide is mainly used for a positive electrode active material, and carbon is mainly used for a negative electrode. There are few studies on the recycling of the negative electrode, and mainly the research and development of the recycling of the positive electrode are being advanced.

Meanwhile, the development of a secondary battery including a negative electrode containing a niobium titanium oxide is being advanced; in order to enhance the recycling rate of the secondary battery, actual recycling of a negative electrode containing a niobium titanium oxide is demanded.

### BRIEF DESCRIPTION OF THE DRAWINGS

FIG. 1 is a schematic diagram showing an example of a recycling system of a first approach.
FIG. 2 is a flowchart showing an example of a recycling method using the recycling system of FIG. 1.
FIG. 3 is a schematic diagram showing another example of the recycling system of the first approach.
FIG. 4 is a flowchart showing an example of a recycling method using the recycling system of FIG. 3.
FIG. 5 is a schematic diagram showing an example of a recycling system of a second approach.
FIG. 6 is a flowchart showing an example of a recycling method using the recycling system of FIG. 5.
FIG. 7 is a schematic diagram showing another example of the recycling system of the second approach.
FIG. 8 is a flowchart showing an example of a recycling method using the recycling system of FIG. 7.
FIG. 9 is a partially cutaway perspective view showing an example of a battery to be subjected to recycling processing of the system or the method according to the approach.
FIG. 10 is an enlarged cross-sectional view of an A portion of FIG. 9.
FIG. 11 is a schematic diagram showing still another example of the recycling system of the second approach.
FIG. 12 is a flowchart showing an example of a recycling method using the recycling system of FIG. 11.

### DETAILED DESCRIPTION

In general, according to one approach, a recycling system is provided. The recycling system includes:
a water dispersion apparatus configured to disperse an electrode containing a niobium titanium oxide in water;
a solid-liquid separation apparatus configured to separate the niobium titanium oxide from the electrode dispersed in the water; and
a first heat treatment apparatus configured to apply heat treatment to the separated niobium titanium oxide.

According to another approach, a recycling method is provided. The recycling method includes:
dispersing an electrode containing a niobium titanium oxide in water;
separating the niobium titanium oxide from the electrode dispersed in the water; and
applying a first heat treatment to the separated niobium titanium oxide.

According to another approach, a recycling method is provided. The recycling method includes:
applying a third heat treatment to a battery including a positive electrode and a negative electrode containing a niobium titanium oxide;
treating the battery with an acidic solvent;
separating the niobium titanium oxide from the battery treated with the acidic solvent; and
applying a first heat treatment to the separated niobium titanium oxide.

According to another approach, a recycling system is provided. The recycling system includes:
a third heat treatment apparatus configured to apply a third heat treatment to a battery including a positive electrode and a negative electrode containing a niobium titanium oxide;
an acid treatment apparatus configured to treat the battery subjected to the third heat treatment with an acidic solvent;
a solid-liquid separation apparatus configured to separate the niobium titanium oxide from the battery treated with the acidic solvent; and
a first heat treatment apparatus configured to apply a first heat treatment to the separated niobium titanium oxide.

According to another approach, a method for manufacturing an electrode is provided. The method includes manufacturing an electrode by using a niobium titanium oxide recovered by the recycling method according to at least one of the approaches.

According to another approach, a method for manufacturing a battery is provided. The method includes manufacturing an electrode by using a niobium titanium oxide recovered by the recycling method according to at least one of the approaches, and
manufacturing the battery including the electrode.

### First Approach

A recycling system and a recycling method according to a first approach will now be described with reference to the drawings. The first approach is recovery and regeneration of a niobium titanium oxide from an electrode containing the niobium titanium oxide. The electrode containing a niobium titanium oxide is not limited to one that has been used and disposed of, and may be one that has been stored or disposed of in an unused state due to circumstances such as non-standard. That is, the use state of the electrode is not questioned. The electrode is also referred to as an electrode to be processed.

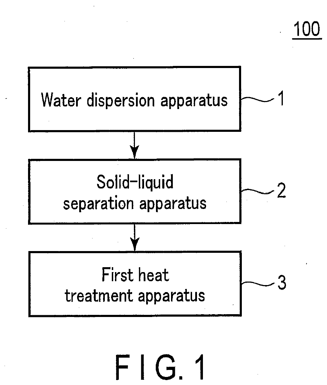

FIG. 1 shows an outline of an example of a recycling system for recovering a niobium titanium oxide from an electrode containing the niobium titanium oxide (an electrode to be processed). A recycling system 100 includes a water dispersion apparatus 1, a solid-liquid separation apparatus 2 placed on the downstream side of the water dispersion apparatus 1, and a first heat treatment apparatus 3 placed on the downstream side of the solid-liquid separation apparatus 2. A workpiece is conveyed by a not-illustrated conveyor, slurry pump, or the like to the water dispersion apparatus 1, the solid-liquid separation apparatus 2, and the first heat treatment apparatus 3 in this order. Thus, the recycling system 100 may include a conveying tool that conveys the workpiece.

The water dispersion apparatus 1 is configured to disperse an electrode containing a niobium titanium oxide (hereinafter, referred to as a TNO electrode) in water. If the TNO electrode is immersed in water, the TNO electrode is divided into a current collector and other members, and can be dispersed in water. This water dispersion is likely to occur in a case where the TNO electrode contains a water-soluble or water-dispersible binder. The niobium titanium oxide is hardly deteriorated if brought into contact with water. Therefore, by dispersing the TNO electrode in water, the TNO electrode can be disassembled without damaging the niobium titanium oxide. The water dispersion apparatus 1 is not particularly limited as long as it includes a container capable of storing water for dispersing the TNO electrode. Examples include a mixing tank equipped with a stirring blade. In order to facilitate the disassembly of the TNO electrode, the water dispersion apparatus 1 can include a pulverizer for pulverizing the TNO electrode.

A slurry in which the TNO electrode is dispersed in water is supplied from the water dispersion apparatus 1 to the solid-liquid separation apparatus 2. The solid-liquid separation apparatus 2 is configured to perform solid-liquid separating a current collector and the niobium titanium oxide from the slurry in which the TNO electrode is dispersed in water. The niobium titanium oxide has a larger density than other materials contained in the electrode, and is therefore suitable for separation using a density difference. In addition, current collecting foil such as aluminum has a larger size than the niobium titanium oxide, and therefore can be separated using the size. Examples of the solid-liquid separation apparatus 2 include a sedimentation separator, a cyclone, a sieve, etc.

The first heat treatment apparatus 3 applies heat treatment to the niobium titanium oxide separated by the solid-liquid separation apparatus 2. As the heat treatment apparatus, a furnace, a rotary kiln, or the like is given.

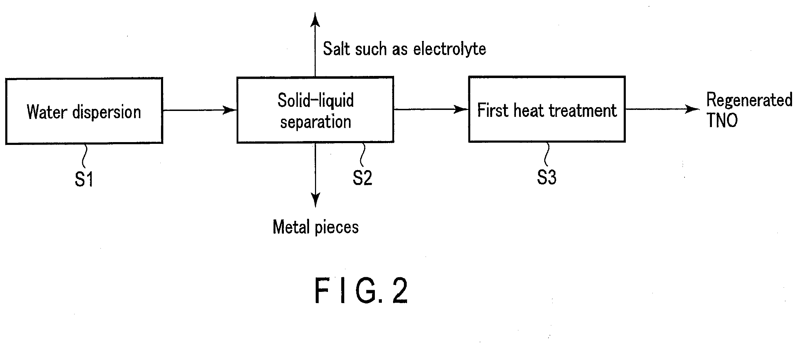

A recycling method using the recycling system 100 described above will now be described with reference to FIG. 2. The recycling method shown in FIG. 2 includes a water dispersion step S1, a solid-liquid separation step S2, and a first heat treatment step S3.

### (Water Dispersion Step S1)

A TNO electrode is supplied to the water dispersion apparatus 1, and is immersed in water in the water dispersion apparatus 1. Thereby, the TNO electrode is dispersed in water, and is divided into metal pieces such as a current collector and electrode materials including the niobium titanium oxide. In a water-dispersed state, the TNO electrode is sent to the next step S2. Here, as a solvent for dispersion, an aqueous liquid such as a mixed liquid of water and an organic substance may be used instead of water. Examples of the organic substance include at least one selected from the group consisting of an alcohol (for example, ethanol), acetonitrile, and acetone.

### (Solid-Liquid Separation Step S2)

Using, for example, a sedimentation separator, metal pieces are removed from the slurry in which the TNO electrode is dispersed in water. By the sedimentation, also materials having smaller densities than the niobium titanium oxide (for example, a carbon material) can be removed. After the removal, the slurry is sieved to remove foreign matter. Next, a cyclone is used to separate the niobium titanium oxide from the slurry. The separated niobium titanium oxide is washed with water to remove remaining ions (for example, a salt such as an electrolyte (a salt containing P or F)) and water-soluble materials (for example, a water-soluble binder). The niobium titanium oxide washed with water is conveyed to the next step S3.

### (First Heat Treatment Step S3)

The niobium titanium oxide washed with water is subjected to a first heat treatment. Thereby, the capacity of the niobium titanium oxide can be recovered, and therefore the niobium titanium oxide can be reused. In a case where a carbon material is adhered to the surface of the niobium titanium oxide particle, the carbon material can be removed by the first heat treatment. The first heat treatment can be performed in the air under the conditions of a temperature of 600°C or more and 1200°C or less, and 24 hours or less. A more preferred range of treatment time is 1 hour or more and 24 hours or less. If the treatment temperature is low or the treatment time is short, it is difficult to sufficiently recover the capacity of the niobium titanium oxide. On the other hand, if the treatment temperature is high or the treatment time is long, the niobium titanium oxide may develop excessive grain growth, and the characteristics of the niobium titanium oxide may be degraded.

In order to adjust the particle size of the niobium titanium oxide subjected to the first heat treatment, the niobium titanium oxide may be subjected to pulverization.

By using the recycling system and the recycling method described above, a reusable or usable niobium titanium oxide can be recovered from an electrode.

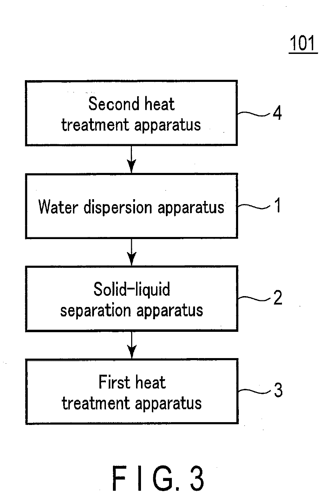

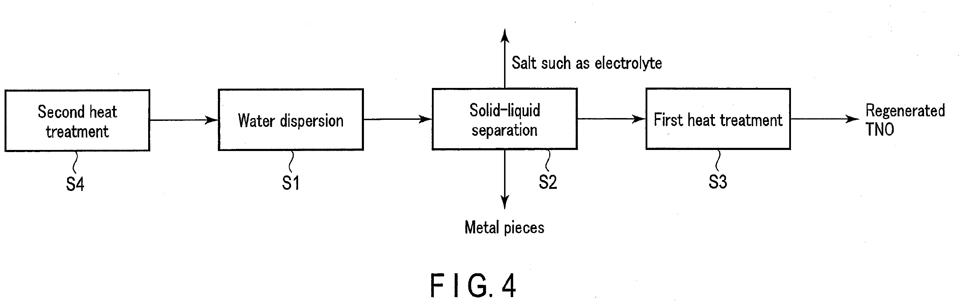

Next, other examples of the recycling system and the recycling method of the first approach are described with reference to FIG. 3 and FIG. 4. FIG. 3 shows an outline of another example of a recycling system for recovering a niobium titanium oxide from an electrode containing the niobium titanium oxide. FIG. 4 is a flowchart of a recycling method using the recycling system shown in FIG. 3.

A recycling system 101 shown in FIG. 3 has a similar configuration to the recycling system 100 except that a second heat treatment apparatus 4 is placed on the upstream side of the water dispersion apparatus 1 of the recycling system 100 shown in FIG. 1.

The second heat treatment apparatus 4 will now be described. The second heat treatment apparatus 4 applies heat treatment to a TNO electrode. Thereby, organic substances can be removed from the TNO electrode. The organic substances are, for example, an organic solvent, a carbon material, a binder, etc. In a case where the binder is water-soluble or water-dispersible, the binder can be removed by being dissolved or dispersed in water in the water dispersion step S1, and therefore the second heat treatment apparatus 4 can be omitted. As the second heat treatment apparatus 4, a furnace, a rotary kiln, or the like is given.

A recycling method using the recycling system shown in FIG. 3 will now be described with reference to FIG. 4. The recycling method shown in FIG. 4 is performed in a similar manner to the recycling method shown in FIG. 2 except that a second heat treatment step S4 is performed before the water dispersion step S1.

The second heat treatment step S4 can be performed in the air, for example. The heat treatment temperature can be in the range of 300°C or more and 900°C or less. The heat treatment temperature is preferably 400°C to 600°C. This is because, by using a temperature equal to or less than the melting point of aluminum, which is used as a current collector, aluminum pieces are allowed to be large in size and are therefore easily separated in a subsequent step. The treatment time can be in the range of 15 minutes or more and 6 hours or less. If the heat treatment temperature is low or the heat treatment time is short, organic substances may not be removed from the TNO electrode but remain. On the other hand, if the heat treatment temperature is high or the heat treatment time is long, metal materials such as a current collector may be melted, and the separation between the metal materials and the niobium titanium oxide may be difficult.

It is desirable that the niobium titanium oxide subjected to the second heat treatment be cooled and then the cooled niobium titanium oxide be subjected to the water dispersion step S1. Thereby, bumping and generation of a large amount of vapor due to a rapid increase in the temperature of water can be prevented in the water dispersion step S1. As a result, problems such as flying up of powder can be avoided, and therefore working can be performed more safely. The niobium titanium oxide is desirably cooled to, for example, 100°C or less.

The water dispersion step S1 and subsequent steps can be performed in a similar manner to the recycling method shown in FIG. 2.

By using the recycling system and the recycling method described above, a reusable or usable niobium titanium oxide can be recovered from an electrode.

The electrode to be recycled is not particularly limited as long as it is an electrode containing a niobium titanium oxide; an example will now be described.

The electrode can include a current collector and an active material-containing layer. The active material-containing layer can be stacked or formed on one surface or both surfaces of the current collector. The active material-containing layer can contain an active material, and optionally a conductive agent and a binder.

The active material contains a niobium titanium oxide. Examples of the niobium titanium oxide include a monoclinic niobium titanium oxide. The monoclinic niobium titanium oxide has features of high crystal structure stability, excellent resistance to water, acid, and alkali, and large density. Examples of the monoclinic niobium titanium oxide include a compound represented by LiₓTi_{1-y}Ml_{y}Nb_{2-z}M2_{z}O_{7+δ}. Here, M1 is at least one selected from the group consisting of Zr, Si, and Sn. M2 is at least one selected from the group consisting of V, Ta, and Bi. The subscripts in the composition formula satisfy 0 ≤ x ≤ 5, 0 ≤ y < 1, 0 ≤ z < 2, and -0.3 ≤ δ ≤ 0.3. Specific examples of the monoclinic niobium titanium oxide include LiₓNb₂TiO₇ (0 ≤ x ≤ 5). The density of LiₓNb₂TiO₇ (0 ≤ x ≤ 5) is 4.34 g/cm³.

Other examples of the monoclinic niobium titanium oxide include a compound represented by LiₓTi_{1-y}M3_{y+z}Nb_{2-z}O_{7-δ}. Here, M3 is at least one selected from Mg, Fe, Ni, Co, W, Ta, and Mo. The subscripts in the composition formula satisfy 0 ≤ x ≤ 5, 0 ≤ y < 1, 0 ≤ z < 2, and -0.3 ≤ δ ≤ 0.3.

The niobium titanium oxide may contain inevitable impurities. Examples of inevitable impurities include K, Na, Si, and P.

The niobium titanium oxide may contain lithium ions.

The niobium titanium oxide can take a form of particles.

The conductive agent is blended in order to enhance current collection performance and to suppress contact resistance between the active material and the current collector. Examples of the conductive agent include vapor grown carbon fiber (VGCF), carbon nanotubes, carbon black such as acetylene black, and carbonaceous substances such as graphite. One of them may be used as a conductive agent, or two or more of them may be used in combination as a conductive agent. Alternatively, instead of using the conductive agent, a carbon coat or an electron conductive inorganic material coat may be applied to the surface of the active material particle.

The binder can fill gaps of the active material, and can bind the active material and the current collector together. Examples of the binder include polytetrafluoroethylene (PTFE), polyvinylidene fluoride (PVdF), fluorine-based rubber, styrene-butadiene rubber, polyacrylic acid compounds, imide compounds, carboxymethyl cellulose (CMC), and salts of CMC. One of them may be used as a binder, or two or more of them may be used in combination as a binder. If a water-soluble binder or a water-dispersed binder such as an emulsion is used, the TNO can be recovered by the flow shown in FIG. 2.

For the blending ratio of the active material, the conductive agent, and the binder in the active material-containing layer, as an example, the active material, the conductive agent, and the binder can be blended in proportions of 68 mass% or more and 96 mass% or less, 2 mass% or more and 30 mass% or less, and 2 mass% or more and 30 mass% or less, respectively.

For the current collector, a material that is electrochemically stable at a potential at which lithium (Li) is inserted into and extracted from the active material is used. Examples of the current collector include copper, nickel, stainless steel, aluminum, and an aluminum alloy. The thickness of the current collector is, as an example, 5 µm or more and 20 µm or less.

The current collector can include, on its surface, a portion where the active material-containing layer is not formed. This portion serves as a collector tab.

The recycling system of the first approach described above includes a water dispersion apparatus configured to disperse an electrode containing a niobium titanium oxide (an electrode to be processed) in water, a solid-liquid separation apparatus configured to separate the niobium titanium oxide from the electrode dispersed in water, and a first heat treatment apparatus configured to apply heat treatment to the separated niobium titanium oxide. The recycling method according to the first approach includes dispersing an electrode containing a niobium titanium oxide (an electrode to be processed) in water, separating the niobium titanium oxide from the electrode dispersed in water, and applying a first heat treatment to the separated niobium titanium oxide. Therefore, according to the first approach, a reusable or usable niobium titanium oxide can be recovered from an electrode.

### Second Approach

A recycling system and a recycling method according to a second approach will now be described with reference to the drawings. The second approach is recovery and regeneration of a niobium titanium oxide from a battery including an electrode containing the niobium titanium oxide (an electrode to be processed) as a negative electrode. The battery is not limited to one that has been used and disposed of, and may be one that has been stored or disposed of in an unused state due to circumstances such as non-standard. That is, the use state of the battery is not questioned. The battery is also referred to as a battery to be processed.

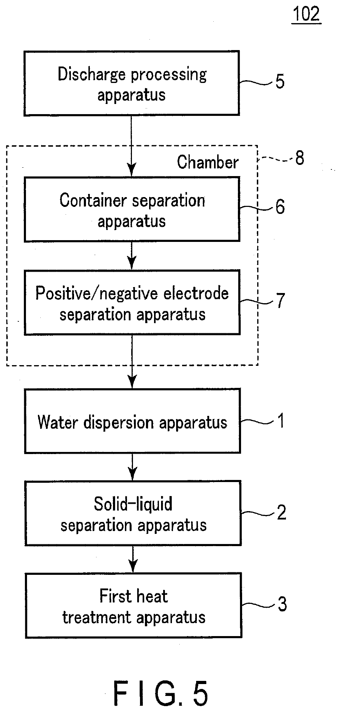

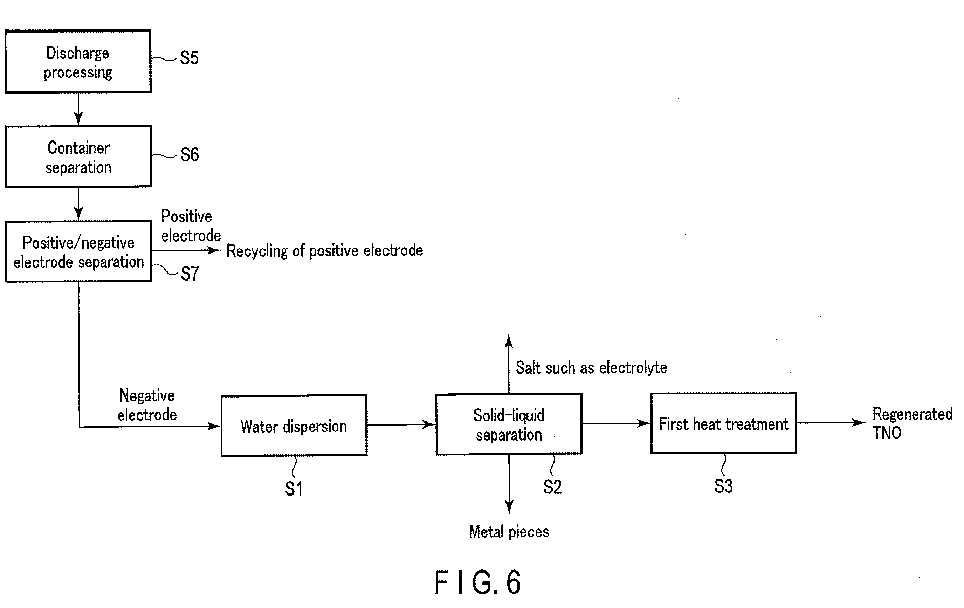

FIG. 5 shows an outline of an example of a recycling system for recovering a niobium titanium oxide from a battery to be processed. A recycling system 102 shown in FIG. 5 has a similar configuration to the recycling system 100 shown in FIG. 1 except that a discharge processing apparatus 5 and a separation apparatus placed on the downstream side of the discharge processing apparatus 5 are provided on the upstream side of the water dispersion apparatus 1 of the recycling system 100. The separation apparatus includes a container separation apparatus 6, a positive/negative electrode separation apparatus 7 placed on the downstream side of the container separation apparatus 6, and a chamber 8 in which the container separation apparatus 6 and the positive/negative electrode separation apparatus 7 are housed. The recycling system 102 and a recycling method using the recycling system 102 will now be described with reference to FIG. 5 and FIG. 6.

A battery to be processed is subjected to discharge processing step S5 by using the discharge processing apparatus 5. The discharge processing apparatus 5 is not particularly limited as long as it can discharge the battery. Examples of the discharge processing apparatus 5 include a charge/discharge apparatus, a resistor, etc. In a case where a usable residual capacity remains in the battery, it is feared that self-discharge will occur, a short-circuit will occur and lead to sparking and ignition, etc. Hence, the battery may need to be sufficiently discharged through the positive and negative electrodes so that a usable residual capacity does not remain. Specifically, the battery is discharged by connecting the battery to a charge/discharge apparatus or attaching an appropriate resistor to the battery. It is desirable to sufficiently discharge the battery until the voltage of the battery is equal to or less than the voltage at which the usable residual capacity of the battery is lost. The battery subjected to discharge processing S5 by the discharge processing apparatus 5 is sent to the container separation apparatus 6 in order to be subjected to container separation step S6.

The container separation apparatus 6 is housed in the chamber 8 together with the positive/negative electrode separation apparatus 7. The inside of the chamber 8 is desirably a low oxygen atmosphere such as a nitrogen atmosphere. Thereby, contact of an electrolyte, etc. with air at the time of disassembly of the battery can be avoided, and therefore the safety of working can be enhanced more. The container separation apparatus 6 is configured to open a container member of the battery by cutting or the like and taking out an electrode group in the container member to the outside. As the container separation apparatus 6, for example, a cutter, a cutting machine, a utility knife, or the like can be used. The electrode group taken out from the battery by container separation S6 using the container separation apparatus 6 is conveyed to the positive/negative electrode separation apparatus 7 in order to be subjected to positive/negative electrode separation step S7.

The positive/negative electrode separation apparatus 7 is configured to separate an electrode group into a positive electrode, a separator, and a negative electrode. The electrode group is obtained as a stack body in which a positive electrode and a negative electrode are stacked with a separator interposed therebetween, such as a stack of a positive electrode, a separator, a negative electrode, a separator, and a positive electrode, or as a wound body in which a positive electrode, a separator, and a negative electrode are wound. For example, in the case of an electrode group using a continuous separator, an apparatus having a mechanism of winding the separator is used as the positive/negative electrode separation apparatus 7. Thereby, the positive electrode and the negative electrode can be separated on the front and back sides of the separator. By thus separating the positive and negative electrodes in advance, the members constituting the positive and negative electrodes are not mixed, and can be effectively recycled. The negative electrode taken out from the electrode group by the positive/negative electrode separation apparatus 7 is conveyed to the water dispersion apparatus 1. The negative electrode may be pulverized before supplied to the water dispersion apparatus 1. Thereby, the dispersion of the negative electrode in water can be promoted. The positive electrode taken out from the electrode group by the positive/negative electrode separation apparatus 7 is subjected to recycling processing separately from the negative electrode.

The negative electrode supplied to the water dispersion apparatus 1 is subjected to similar processing to the first approach described with reference to FIG. 1 and FIG. 2. Although the separation apparatus may be divided into the container separation apparatus 6 and the positive/negative electrode separation apparatus 7 as described above, it may be an apparatus having two functions of container separation and positive/negative electrode separation.

By using the recycling system and the recycling method described above, a reusable or usable niobium titanium oxide can be safely recovered from a battery.

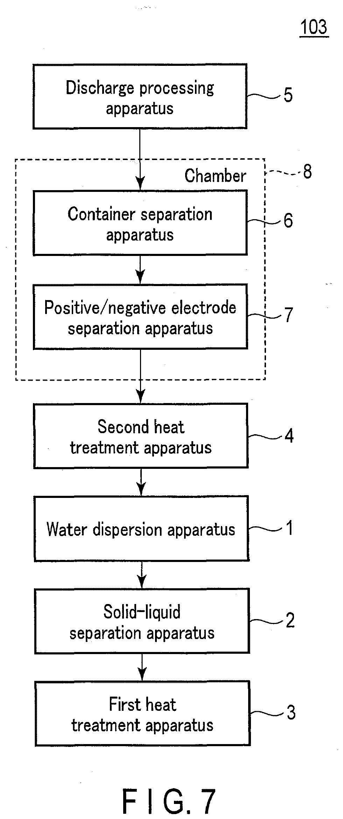

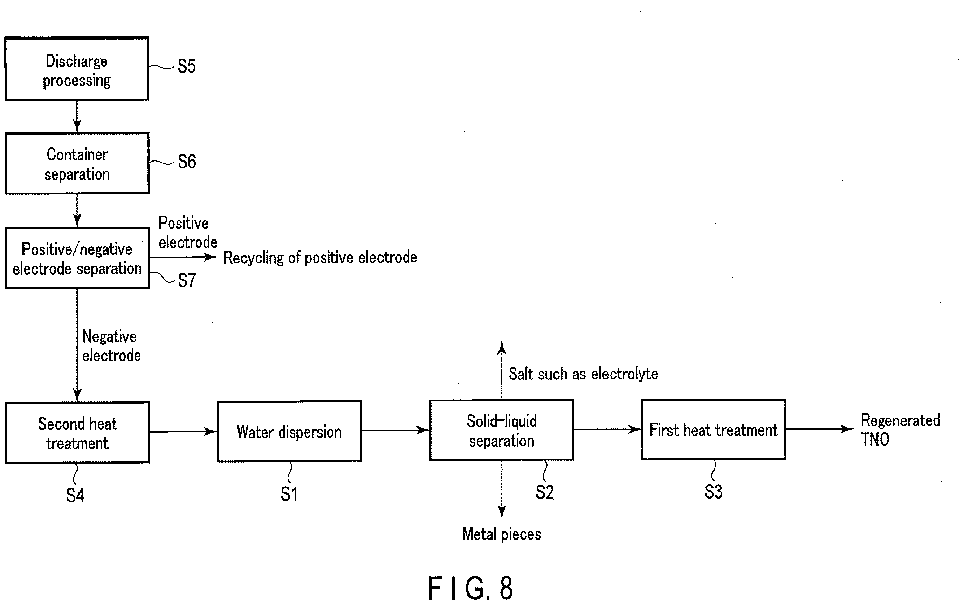

The second approach is not limited to the form shown in FIG. 5 and FIG. 6, and may be, for example, the form shown in FIG. 7 and FIG. 8. FIG. 7 shows an outline of an example of a recycling system for recovering a niobium titanium oxide from a battery to be processed. FIG. 8 shows a flowchart of the recycling method shown in FIG. 7.

A recycling system 103 shown in FIG. 7 has a similar configuration to the recycling system 101 shown in FIG. 3 except that a discharge processing apparatus 5, a container separation apparatus 6 placed on the downstream side of the discharge processing apparatus 5, a positive/negative electrode separation apparatus 7 placed on the downstream side of the container separation apparatus 6, and a chamber 8 in which the container separation apparatus 6 and the positive/negative electrode separation apparatus 7 are housed are provided on the upstream side of a water dispersion apparatus 1 of the recycling system 101.

Therefore, by using the recycling system 103 shown in FIG. 7 and the recycling method shown in FIG. 8, a reusable or usable niobium titanium oxide can be safely recovered from a battery.

The battery to be subjected to recycling processing is not particularly limited as long as it includes an electrode containing a niobium titanium oxide. Examples of the battery include a battery including an aqueous electrolyte, a battery including a nonaqueous electrolyte, and the like. Also any of a unit of a single battery, a battery module, and a battery pack is possible.

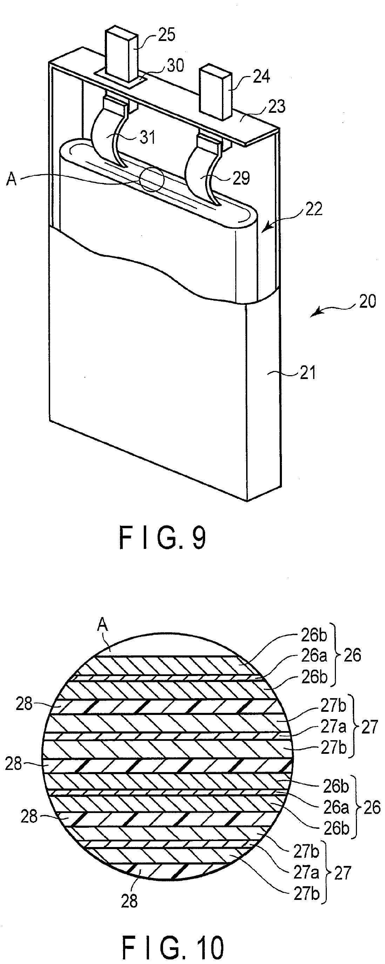

An example of a battery (for example, secondary battery) will now be described with reference to FIG. 9 and FIG. 10. FIG. 9 is a partially cutaway perspective view showing a nonaqueous electrolyte secondary battery that is an example of a battery. FIG. 10 is an enlarged cross-sectional view of an A portion of the nonaqueous electrolyte secondary battery shown in FIG. 9. As shown in FIG. 9, a nonaqueous electrolyte battery 20 includes a bottomed rectangular cylindrical metal container 21, a flat electrode group 22, a metal sealing plate 23, a negative electrode terminal 24, and a positive electrode terminal 25. The flat electrode group 22 is housed in the metal container 21. The flat electrode group 22 includes a negative electrode 26, a positive electrode 27, and a separator 28. The electrode group 22 has a structure in which the negative electrode 26 and the positive electrode 27 are spirally wound in a flat shape with the separator 28 interposed therebetween. Although a wound electrode group is described herein, the electrode group may be a stacked electrode group in which a plurality of negative electrodes 26, a plurality of separators 28, and a plurality of positive electrodes 27 are stacked. As shown in FIG. 10, the negative electrode 26 includes a negative electrode current collector 26a and a negative electrode active material-containing layer 26b supported on the negative electrode current collector 26a. As shown in FIG. 10, the positive electrode 27 includes a positive electrode current collector 27a and a positive electrode active material-containing layer 27b supported on the positive electrode current collector 27a. An electrolyte (not illustrated) is retained in the electrode group 22. The opening of the metal container 21 is sealed with the metal sealing plate 23. The metal container 21 and the sealing plate 23 constitute a container member.

As shown in FIG. 9, the metal sealing plate 23 is provided with the negative electrode terminal 24. A negative electrode tab 29 is electrically connected to the negative electrode terminal 24. The negative electrode tab 29 is electrically connected to the negative electrode current collector 26a of the negative electrode 26. The positive electrode terminal 25 is fixed to the metal sealing plate 23 via an insulating member 30. A positive electrode tab 31 is electrically connected to the positive electrode terminal 25. The positive electrode tab 31 is electrically connected to the positive electrode current collector 27a of the positive electrode 27.

Examples of the negative electrode 26 include the TNO electrode described in the first approach. Examples of the positive electrode active material contained in the positive electrode 27 include a compound that Li or Li ions can be inserted into and extracted from. Examples of the positive electrode current collector 27a include metal foil.

As the separator 28, for example, a porous film, a synthetic resin nonwoven fabric, a solid electrolyte layer, or the like can be used.

As the electrolyte, for example, an aqueous electrolyte, a nonaqueous electrolyte, or the like can be used. The nonaqueous electrolyte is prepared by, for example, dissolving an electrolyte salt such as a lithium salt in an organic solvent. The aqueous electrolyte is prepared by, for example, dissolving an electrolyte salt such as a lithium salt in an aqueous solvent. Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bis (trifluoromethylsulfonyl) imide (LiN(CF₃SO₂)₂).

Although the container member shown as an example in FIG. 9 and FIG. 10 contains metal, it is not limited thereto; for example, a laminate film or the like may be used as the container member. The shape of the container member is not particularly limited. The shape of the container member may be, for example, a flat shape (thin shape), a square shape, a cylindrical shape, a coin shape, a button shape, or the like. The container member can be selected according to the size of the battery or the use of the battery, as appropriate.

The recycling system and the recycling method of the second approach described above separate an electrode from a battery, and then recover a niobium titanium oxide from the electrode according to the first approach; thus, the recycling system and the recycling method can recover a reusable or usable niobium titanium oxide from a battery.

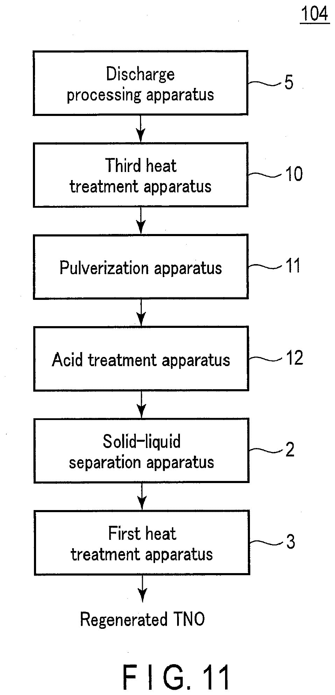

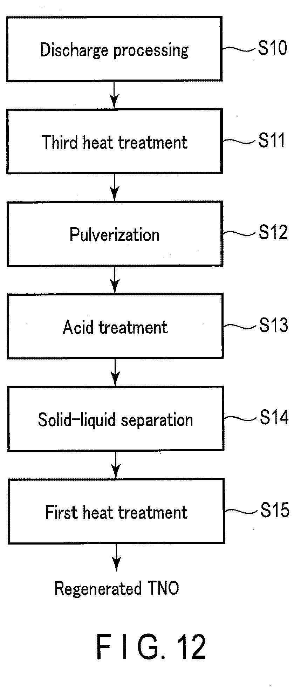

Still another example of the second approach will now be described with reference to FIG. 11 and FIG. 12. FIG. 11 shows an outline of an example of a recycling system for recovering a niobium titanium oxide from a battery to be processed. A recycling system 104 shown in FIG. 11 includes a discharge processing apparatus 5, and a third heat treatment apparatus 10, a pulverization apparatus 11, an acid treatment apparatus 12, a solid-liquid separation apparatus 2, and a first heat treatment apparatus 3 that are placed in this order on the downstream side of the discharge processing apparatus 5. A workpiece is conveyed by a not-illustrated conveyor, slurry pump, or the like to the discharge processing apparatus 5, the third heat treatment apparatus 10, the pulverization apparatus 11, the acid treatment apparatus 12, the solid-liquid separation apparatus 2, and the first heat treatment apparatus 3 in this order. Thus, the recycling system 104 may include a conveying tool that conveys the workpiece. FIG. 12 shows an example of a flow of a recycling method using the recycling system 104.

### (Discharge Processing Step S10)

A battery to be processed is subjected to discharge processing S10 by using the discharge processing apparatus 5. The discharge processing apparatus 5 and the discharge processing S10 are as described in the first approach. The battery subjected to the discharge processing S10 by the discharge processing apparatus 5 is sent to the third heat treatment apparatus 10 in order to be subjected to a third heat treatment S11.

### (Third Heat Treatment Step S11)

Before the third heat treatment S11 is performed, container separation step S6 by the container separation apparatus 6 may be performed. The container separation apparatus 6 and the container separation step S6 are as described in the first approach.

The third heat treatment apparatus 10 will now be described. The third heat treatment apparatus 10 applies heat treatment to the battery subjected to the discharge processing S10. The battery may or may not include a container member. By the third heat treatment, organic substances can be removed from the battery to be processed. The organic substances are, for example, an organic solvent, a carbon material, a binder, etc. As a result, avoidance of environmental pollution and risk due to organic substances, separation of current collectors from the positive electrode and the negative electrode, etc. can be promoted. Examples of the third heat treatment apparatus 10 include a furnace, a rotary kiln, and the like.

The third heat treatment step S11 can be performed in the air, for example. The heat treatment temperature can be in the range of 300°C or more and 900°C or less. The heat treatment temperature is preferably 400°C to 600°C. This is because, by using a temperature equal to or less than the melting point of aluminum, which is used as a current collector, aluminum pieces are allowed to be large in size and are therefore easily separated in a subsequent step. The treatment time can be in the range of 15 minutes or more and 6 hours or less. If the heat treatment temperature is low or the heat treatment time is short, organic substances may not be removed from the battery to be processed but remain. On the other hand, if the heat treatment temperature is high or the heat treatment time is long, metal materials such as a current collector may be melted, and the separation between the metal materials and the niobium titanium oxide may be difficult.

After the third heat treatment S11, the battery to be processed may be cooled as necessary. Examples of the cooling include air cooling, water cooling, and the like.

### (Pulverization Step S12)

The battery to be processed subjected to the third heat treatment is desirably subjected to pulverization S12. Thereby, the dissolution of the positive electrode in an acidic solvent can be promoted in acid treatment S13 performed in a subsequent step. As a result, the positive electrode can be easily removed from the battery to be processed. The pulverization apparatus 11 is not particularly limited, and examples include a pulverizer using shear stress (for example, a hammer mill), and the like. The pulverization S12 may be omitted.

### (Acid Treatment Step S13)

The battery to be processed subjected to the pulverization step S12 as necessary is subjected to acid treatment S13. Examples of the acid treatment include immersion of the battery to be processed in an acidic solvent, shaking of the battery to be processed in an acidic solvent, ultrasonication of the battery to be processed in an acidic solvent, and the like. Each piece of processing may be performed alone, or a plurality of pieces of processing may be combined. If the battery to be processed is subjected to acid treatment, metal materials such as a current collector and a terminal (for example, Al or an Al alloy), and the positive electrode active material are dissolved in an acidic solvent. On the other hand, the niobium titanium oxide is not dissolved in an acidic solvent because of its high acid resistance. As a result, most substances of the battery to be processed are removed by being dissolved in the acidic solvent, a solid mainly containing the niobium titanium oxide is dispersed in the acidic solvent, and part of the solid is precipitated in the acidic solvent. The positive electrode active material dissolved in the acidic solvent can be regenerated by recycling processing in a separate step.

The acidic solvent can be, for example, an aqueous solution containing at least one of nitric acid and sulfuric acid. Thereby, the dissolution of the positive electrode active material and metal materials in the acidic solvent can be promoted. The pH of the solution can be 1 or less (provided that 0 is not included).

The acid treatment can be performed while the temperature of the acidic solvent is held at room temperature or more. Thereby, the dissolution of the positive electrode active material and metal materials in the acidic solvent can be promoted. However, if the temperature of the acidic solvent is too high, water contained in the acidic aqueous solution as the acidic solvent may volatilize. Also, if the temperature of the acidic solvent is too high, the niobium titanium oxide may be dissolved in the acidic solvent. A more preferred range of the temperature of the acid treatment is room temperature or more and 50°C or less.

The acid treatment apparatus 12 used for the acid treatment is not particularly limited as long as it includes a container capable of storing an acidic solvent for dispersing the battery to be processed. Examples include a mixing tank including a stirring blade. In order to promote the disassembly of the battery to be processed, the acid treatment apparatus 12 can include a pulverizer for pulverizing the battery to be processed. The acid treatment may be performed while ultrasonic waves are applied to the battery to be processed.

The acidic solvent in which a solid mainly containing the niobium titanium oxide is dispersed is subjected to solid-liquid separation S14 by the solid-liquid separation apparatus 2. Before the solid-liquid separation S14, the niobium titanium oxide may be washed with water. Thereby, the remaining acidic solvent, etc. can be removed.

### (Solid-Liquid Separation Step S14)

The niobium titanium oxide is recovered by solid-liquid separation from the acidic solvent in which a solid mainly containing the niobium titanium oxide is dispersed. Examples of the solid-liquid separation include sedimentation, centrifugation, filtration, sieving, etc. The niobium titanium oxide has a larger density than other materials contained in the electrode, and is therefore suitable for separation using a density difference. Examples of this separation include sedimentation and centrifugation.

The acidic solvent in which a solid mainly containing the niobium titanium oxide is dispersed is supplied from the acid treatment apparatus 12 to the solid-liquid separation apparatus 2. The solid-liquid separation apparatus 2 is configured to performsolid-liquid separation the niobium titanium oxide from the acidic solvent. Examples of the solid-liquid separation apparatus 2 include a sedimentation separator, a cyclone, a sieve, etc.

Using, for example, a sedimentation separator, metal pieces are removed from the acidic solvent in which a solid mainly containing the niobium titanium oxide is dispersed. By the sedimentation, also materials having smaller densities than the niobium titanium oxide (for example, a carbon material) can be removed. After the removal, the acidic solvent is sieved to remove foreign matter. Next, a cyclone is used to separate the niobium titanium oxide from the acidic solvent. Alternatively, in a case where most of the positive electrode active material, etc. are dissolved in an acidic solvent, the niobium titanium oxide can be separated from the acidic solvent by a cyclone without performing sedimentation or sieving.

The niobium titanium oxide obtained by the solid-liquid separation may be washed with water. Thereby, remaining ions (for example, a salt such as an electrolyte (a salt containing P or F)), etc. can be removed.

After the separation, the niobium titanium oxide washed with water as necessary is conveyed to the next step S15.

### (First Heat Treatment Step S15)

In a first heat treatment step S15, a first heat treatment by the first heat treatment apparatus 3 is performed. Examples of the first heat treatment apparatus include a furnace, a rotary kiln, and the like.

The niobium titanium oxide is subjected to the first heat treatment. Thereby, the capacity of the niobium titanium oxide can be recovered, and therefore the niobium titanium oxide can be reused. In a case where an acidic solvent remains on the surface of the niobium titanium oxide particle, the acidic solvent can be removed by the first heat treatment. The first heat treatment can be performed in the air under the conditions of a temperature of 600°C or more and 1200°C or less, and 24 hours or less. A more preferred range of treatment time is 1 hour or more and 24 hours or less. If the treatment temperature is low or the treatment time is short, it is difficult to sufficiently recover the capacity of the niobium titanium oxide. On the other hand, if the treatment temperature is high or the treatment time is long, the niobium titanium oxide may develop excessive grain growth, and the characteristics may be degraded.

In order to adjust the particle size of the niobium titanium oxide subjected to the first heat treatment, the niobium titanium oxide may be subjected to pulverization.

By using the recycling system and the recycling method described above, a reusable or usable niobium titanium oxide can be safely and easily recovered from a battery to be processed without performing the operation of separating only an electrode from the battery to be processed.

### Third Approach

A third approach is a method for manufacturing an electrode in which an electrode is manufactured using a niobium titanium oxide recovered in the first or second approach.

A method for manufacturing an electrode includes dispersing a niobium titanium oxide, a conductive agent, and a binder in a solvent to prepare a slurry, applying the slurry to a current collector, drying the slurry applied to the current collector to form an active material-containing layer, and pressing the active material-containing layer formed on the current collector. After the drying, cutting the current collector on which the active material-containing layer is formed may be performed as necessary. As the niobium titanium oxide, the conductive agent, the binder, and the current collector, similar ones to those described in the first approach can be given.

According to the third approaches, since an electrode is manufactured using a niobium titanium oxide recovered in the first or second approach, electrodes can be manufactured at a high recycling rate.

### Fourth Approach

A fourth approach relates to a method for manufacturing a battery. A method for manufacturing a battery includes producing an electrode group including, as a negative electrode, an electrode manufactured in the third approach, housing the electrode group in a container member, causing the electrode group housed in the container member to retain an electrolyte, and sealing the container member. The electrode group is produced by, for example, placing a separator between a positive electrode and a negative electrode. The shape of the electrode group is not particularly limited; for example, a structure in which a positive electrode, a separator, and a negative electrode are stacked, a structure in which a positive electrode, a separator, and a negative electrode are wound in a flat or cylindrical shape, a structure in which a positive electrode, a separator, and a negative electrode are bent in a zigzag pattern, or the like can be used. As the electrolyte, similar ones to those described in the second approach can be given.

According to the fourth approach, since an electrode manufactured using a niobium titanium oxide recovered in the first or second approach is used, batteries can be manufactured at a high recycling rate.

The battery manufactured by the method of the fourth approach may be used as a battery module, or may be incorporated into a battery pack. The battery according to the approach is suitably used for uses requiring excellent cycle performance in a case where a large current is taken out. Specifically, the battery is used as a power source of a digital camera, alternatively as a battery for, for example, a vehicle such as a two-wheel to four-wheel hybrid electric vehicle, a two-wheel to four-wheel electric vehicle, an assist bicycle, or a railway vehicle (for example, a train), or as a stationary battery. In particular, the battery is suitably used as an on-vehicle battery mounted on a vehicle.

### Examples

Hereinbelow, Examples of the present invention are described in detail with reference to the drawings; however, the present invention is not limited to the Examples described below.

### Example 1

Using the recycling system 103 shown in FIG. 7 and the procedure shown in FIG. 8, recycling of a niobium titanium oxide was performed on a battery including a TNO electrode as a negative electrode and using a metal can as a container member (hereinafter, referred to as a battery to be processed).

The battery to be processed incorporated in a waste module was separated, and only the battery to be processed was taken out. The taken out battery was set in a charge/discharge apparatus as a discharge processing apparatus 5, and discharge processing was performed at a current value of 1 C. At this time, after the voltage reached 1.5 V, which is a discharge reference voltage of the battery, an additional 5-minute discharge was performed. The battery subjected to the discharge processing was set in a container separation apparatus 6 installed in a chamber 8 set in a nitrogen atmosphere, and the container member (can) was cut to take out an electrode group. The electrode group was subjected to a positive/negative electrode separation apparatus 7 provided in the chamber 8, and was separated into a positive electrode, a separator, and a negative electrode.

The separated negative electrode was put into a second heat treatment apparatus 4 held at 600°C, and organic substances contained in the negative electrode were removed. The heat treatment time was 60 minutes. Powder containing the niobium titanium oxide obtained here was cooled to 100°C or less, and was then dispersed in water by using a water dispersion apparatus 1. After that, the dispersion was introduced into a solid-liquid separation apparatus 2, a coarse mesh was used to remove large aluminum pieces, and then a cyclone was used to separate the niobium titanium oxide. After that, water washing was performed to remove ions remaining in the niobium titanium oxide. The niobium titanium oxide was one represented by Nb₂TiO₇.

Part of the niobium titanium oxide obtained here was taken out, 10 mass% of acetylene black as a conductive agent and 10 mass% of CMC as a binder were added to 80 mass% of the niobium titanium oxide, and these were kneaded together with a water solvent to prepare a slurry. The slurry was applied onto aluminum foil, and then drying and pressing were performed to produce an electrode. The obtained electrode was used to produce a coin-type cell, and the capacity of the niobium titanium oxide was checked; then, the capacity was found to be 237 mAh/g.

The remaining niobium titanium oxide other than the part taken out as described above was introduced into a first heat treatment apparatus 3, and heat treatment at 900°C for 30 minutes in the air was performed to remove the remaining organic substances and perform reactivation; thus, a regenerated niobium titanium oxide was obtained. The regenerated niobium titanium oxide was used to produce a coin-type cell by a similar method to that described above, and the capacity was checked; then, the capacity was found to be 265 mAh/g, and it was determined that the capacity of the niobium titanium oxide was recovered.

### Examples 2 and 3

Recycling processing was performed in a similar manner to Example 1 except that the temperature and time of the first heat treatment and the second heat treatment were changed as shown in Table 1. The capacity of the niobium titanium oxide was checked by a similar method to Example 1, and it was determined that the capacity was recovered by the first heat treatment as shown in Table 1.

### Example 4

Using the recycling system 102 shown in FIG. 5 and the procedure shown in FIG. 6, recycling of a niobium titanium oxide was performed on a battery to be processed incorporated in a waste module.

Discharge processing step S5, container separation step S6, and positive/negative electrode separation step S7 were performed in a similar manner to Example 1.

The separated negative electrode was immersed in water by using a water dispersion apparatus 1, and the negative electrode was separated into aluminum foil and electrode materials. Next, as solid-liquid separation S2, a sieve was used to remove large pieces of aluminum foil. Continuingly as solid-liquid separation S2, a coarse mesh was used to remove large pieces of foreign matter (aluminum foil, etc. that were not removed in the previous step) from a slurry containing the electrode materials, and then a cyclone was used to separate the niobium titanium oxide. After that, the niobium titanium oxide was washed with water to remove remaining ions and a water-soluble binder (CMC). The niobium titanium oxide was one represented by Nb₂TiO₇. Part of the niobium titanium oxide obtained here was taken out, 10 mass% of acetylene black as a conductive agent and 10 mass% of CMC as a binder were added to 80 mass% of the niobium titanium oxide, and these were kneaded together with a water solvent to prepare a slurry. The slurry was applied onto aluminum foil, and then drying and pressing were performed to produce an electrode. The obtained electrode was used to produce a coin-type cell, and the capacity of the niobium titanium oxide was checked; then, the capacity was found to be 228 mAh/g. The niobium titanium oxide obtained here was introduced into a first heat treatment apparatus 3, and a first heat treatment was performed at 900°C for 30 minutes in the air to remove the remaining organic substances and perform reactivation; thus, a regenerated niobium titanium oxide was obtained. The capacity of the regenerated niobium titanium oxide was checked with a coin-type cell produced in a similar manner to the above; then, the capacity was found to be 266 mAh/g, and it was determined that the capacity of the niobium titanium oxide was recovered.

The temperature and time of each of the second heat treatment and the first heat treatment, the capacity after the second heat treatment, and the capacity after the first heat treatment of Examples 1 to 4 are shown in Table 1.

| Table 1 | Second heat treatment | | Capacity after the second heat treatment (mAh/g) | First heat treatment | | Capacity after the first heat treatment (mAh/g) |
|---|---|---|---|---|---|---|
| | Temperature (°C) | Time (h) | | Temperature (°C) | Time (h) | |
| Example 1 | 600 | 1 | 237 | 900 | 0.5 | 265 |
| Example 2 | 800 | 1 | 246 | 900 | 1 | 268 |
| Example 3 | 800 | 1 | 246 | 1100 | 0.5 | 270 |
| Example 4 | N/A | N/A | 228 | 900 | 0.5 | 266 |

The recycling system of at least one of these approaches or Examples includes a water dispersion apparatus configured to disperse an electrode containing a niobium titanium oxide in water, a solid-liquid separation apparatus configured to separate the niobium titanium oxide from the electrode dispersed in water, and a first heat treatment apparatus configured to apply heat treatment to the separated niobium titanium oxide; thus, the recycling system can recover a reusable or useable niobium titanium oxide from an electrode or a battery.

### Example 5

Recycling of a niobium titanium oxide was performed on a battery including a TNO electrode as a negative electrode and using a metal can as a container member (hereinafter, referred to as a battery to be processed).

The battery to be processed incorporated in a waste module was separated, and only the battery to be processed was taken out. The taken out battery was set in a charge/discharge apparatus, and discharge processing was performed at a current value of 1 C. At this time, after the voltage reached 1.5 V, which is a discharge reference voltage of the battery, an additional 5-minute discharge was performed. The battery subjected to the discharge processing was put into a third heat treatment apparatus held at 600°C. The heat treatment time was 60 minutes (1 hour). Powder containing the niobium titanium oxide obtained here was cooled to 25°C or less, and was then immersed in an acid aqueous solution for 1 hour. The acid aqueous solution was a nitric acid aqueous solution having a pH of 1, and was held at 40°C. After that, a cyclone was used to separate the niobium titanium oxide. After that, water washing was performed to remove ions remaining in the niobium titanium oxide. The niobium titanium oxide was one represented by Nb₂TiO₇.

Part of the niobium titanium oxide obtained here was taken out, 10 mass% of acetylene black as a conductive agent and 10 mass% of CMC as a binder were added to 80 mass% of the niobium titanium oxide, and these were kneaded together with a water solvent to prepare a slurry. The slurry was applied onto aluminum foil, and then drying and pressing were performed to produce an electrode. The obtained electrode was used to produce a coin-type cell, and the capacity of the niobium titanium oxide was checked; then, the capacity was found to be 231 mAh/g.

The remaining niobium titanium oxide other than the part taken out as described above was introduced into a first heat treatment apparatus, and a first heat treatment at 900°C for 60 minutes in the air was performed; thus, a regenerated niobium titanium oxide was obtained. The regenerated niobium titanium oxide was used to produce a coin-type cell by a similar method to the above, and the capacity was checked; then, the capacity was found to be 255 mAh/g, and it was determined that the capacity of the niobium titanium oxide was recovered.

### Example 6

Recycling of a niobium titanium oxide was performed on a battery including a TNO electrode as a negative electrode and using a metal can as a container member (hereinafter, referred to as a battery to be processed).

Discharge processing, a third heat treatment, acid treatment, and solid-liquid separation were performed in a similar manner to Example 5 except that a sulfuric acid aqueous solution having a pH of 1 and held at 40°C was used as an acid aqueous solution, and then the capacity of the niobium titanium oxide was checked in a similar manner to Example 5; then, the capacity was found to be 235 mAh/g.

The remaining niobium titanium oxide other than the part taken out as described above was subjected to a first heat treatment in a similar manner to Example 5; thus, a regenerated niobium titanium oxide was obtained. The regenerated niobium titanium oxide was used to produce a coin-type cell by a similar method to the above, and the capacity was checked; then, the capacity was found to be 253 mAh/g, and it was determined that the capacity of the niobium titanium oxide was recovered.

The temperature and time of each of the third heat treatment and the first heat treatment, the capacity after the third heat treatment, and the capacity after the first heat treatment of Examples 5 and 6 are shown in Table 2.

| Table 2 | Third heat treatment | | | | First heat treatment | | |
|---|---|---|---|---|---|---|---|
| | Temperature (°C) | Time (h) | Capacity (mAh/g) | Acid Species | Temperature (°C) | Time (h) | Capacity (mAh/g) |
| Example 5 | 600 | 1 | 231 | Nitric acid pH1 | 900 | 1 | 255 |
| Example 6 | 600 | 1 | 235 | Sulfuric acid pH1 | 900 | 1 | 253 |

As shown in Table 2, the recycling method of the approach includes applying a third heat treatment to a battery to be processed including a positive electrode and a negative electrode containing a niobium titanium oxide, applying acid treatment to the battery to be processed, separating the niobium titanium oxide from the battery to be processed subjected to the acid treatment, and applying a first heat treatment to the separated niobium titanium oxide; thus, the recycling method can safely and easily recover and reproduce a niobium titanium oxide from a battery to be processed without requiring the operation of separating only an electrode from the battery to be processed.

In the following, the disclosure according to the approach is additionally written.
(1) A recycling system including: a water dispersion apparatus configured to disperse an electrode containing a niobium titanium oxide in water;
   a solid-liquid separation apparatus configured to separate the niobium titanium oxide from the electrode dispersed in the water; and
   a first heat treatment apparatus configured to apply heat treatment to the separated niobium titanium oxide.
(2) The recycling system according to clause (1), further including a second heat treatment apparatus configured to apply heat treatment to the electrode before water dispersion.
(3) The recycling system according to clause (2), further including a separation apparatus configured to separate the electrode from a battery including a positive electrode and the electrode as a negative electrode.
(4) The recycling system according to clause (1), further including a separation apparatus configured to separate the electrode from a battery including a positive electrode and the electrode as a negative electrode.
(5) A recycling method including:
   dispersing an electrode containing a niobium titanium oxide in water;
   separating the niobium titanium oxide from the electrode dispersed in the water; and
   applying a first heat treatment to the separated niobium titanium oxide.
(6) The recycling method according to clause (5), further including, before the water dispersion, applying a second heat treatment to the electrode.
(7) The recycling method according to clause (6), including, before the second heat treatment, separating the electrode from a battery including a positive electrode and the electrode as a negative electrode.
(8) The recycling method according to clause (5), including, before the water dispersion, separating the electrode from a battery including a positive electrode and the electrode as a negative electrode.
(9) A method for manufacturing an electrode, the method including manufacturing an electrode by using a niobium titanium oxide recovered by the recycling system or the recycling method according to any one of clauses (1) to (8) .
(10) A method for manufacturing a battery, the method including: manufacturing an electrode by using a niobium titanium oxide recovered by the recycling system or the recycling method according to any one of clauses (1) to (8); and
   manufacturing the battery including the electrode.
(11) The recycling system or the recycling method according to any one of clauses (1) to (10), in which the niobium titanium oxide contains at least one selected from the group consisting of a niobium titanium oxide represented by a general formula LiₓTi_{1-y}M1_{y}Nb_{2-z}M2_{z}O_{7+δ} and a niobium titanium oxide represented by a general formula LiₓTi_{1-y}M3_{y+z}Nb_{2-z}O_{7-δ},
   where the M1 is at least one selected from the group consisting of Zr, Si, and Sn, the M2 is at least one selected from the group consisting of V, Ta, and Bi, the M3 is at least one selected from the group consisting of Mg, Fe, Ni, Co, W, Ta, and Mo, the x satisfies 0 ≤ x ≤ 5, the y satisfies 0 ≤ y < 1, the z satisfies 0 ≤ z < 2, and the δ satisfies -0.3 ≤ δ ≤ 0.3.
(12) A recycling method including:
   applying a third heat treatment to a battery including a positive electrode and a negative electrode containing a niobium titanium oxide;
   treating the battery with an acidic solvent;
   separating the niobium titanium oxide from the battery treated with the acidic solvent; and
   applying a first heat treatment to the separated niobium titanium oxide.
(13) The recycling method according to clause (12), in which the battery further includes a container member.
(14) The recycling method according to clause (12) or (13), further including, before the treating of the battery with an acidic solvent, pulverizing the battery subjected to the third heat treatment.
(15) The recycling method according to any one of clauses (12) to (14), in which the acidic solvent contains at least one of nitric acid and sulfuric acid.
(16) A method for manufacturing an electrode, the method including manufacturing an electrode by using a niobium titanium oxide recovered by the recycling method according to any one of clauses (12) to (15).
(17) A method for manufacturing a battery, the method including: producing an electrode by using a niobium titanium oxide recovered by the recycling method according to any one of clauses (12) to (15); and
   manufacturing a battery including the electrode.
(18) A recycling system including:
   a third heat treatment apparatus configured to apply a third heat treatment to a battery including a positive electrode and a negative electrode containing a niobium titanium oxide;
   an acid treatment apparatus configured to treat the battery subjected to the third heat treatment with an acidic solvent;
   a solid-liquid separation apparatus configured to separate the niobium titanium oxide from the battery treated with the acidic solvent; and
   a first heat treatment apparatus configured to apply a first heat treatment to the separated niobium titanium oxide.
(19) The recycling system or the recycling method according to any one of clauses (12) to (18), in which the niobium titanium oxide contains at least one selected from the group consisting of a niobium titanium oxide represented by a general formula LiₓTi_{1-y}M1_{y}Nb_{2-z}M2_{z}O_{7+δ} and a niobium titanium oxide represented by a general formula LiₓTi_{1-y}M3_{y+z}Nb_{2-z}O_{7-δ},
   where the M1 is at least one selected from the group consisting of Zr, Si, and Sn, the M2 is at least one selected from the group consisting of V, Ta, and Bi, the M3 is at least one selected from the group consisting of Mg, Fe, Ni, Co, W, Ta, and Mo, the x satisfies 0 ≤ x ≤ 5, the y satisfies 0 ≤ y < 1, the z satisfies 0 ≤ z < 2, and the δ satisfies -0.3 ≤ δ ≤ 0.3.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. A recycling system comprising:
a water dispersion apparatus (1) configured to disperse an electrode containing a niobium titanium oxide in water;
a solid-liquid separation apparatus (2) configured to separate the niobium titanium oxide from the electrode dispersed in the water; and
a first heat treatment apparatus (3) configured to apply heat treatment to the separated niobium titanium oxide.

2. The recycling system according to claim 1, further comprising a second heat treatment apparatus (4) configured to apply heat treatment to the electrode before water dispersion.

3. The recycling system according to claim 2, further comprising a separation apparatus (6) or (7) configured to separate the electrode from a battery including a positive electrode and the electrode as a negative electrode.

4. The recycling system according to claim 1, further comprising a separation apparatus (6) or (7) configured to separate the electrode from a battery including a positive electrode and the electrode as a negative electrode.

5. A recycling method comprising:
dispersing (S1) an electrode containing a niobium titanium oxide in water;
separating (S2) the niobium titanium oxide from the electrode dispersed in the water; and
applying (S3) a first heat treatment to the separated niobium titanium oxide.

6. The recycling method according to claim 5, further comprising, before the water dispersion (S1), applying (S4) a second heat treatment to the electrode.

7. The recycling method according to claim 6, comprising, before the second heat treatment (S4), separating (S6) or (S7) the electrode from a battery including a positive electrode and the electrode as a negative electrode.

8. The recycling method according to claim 5, comprising, before the water dispersion (S1), separating (S6) or (S7) the electrode from a battery including a positive electrode and the electrode as a negative electrode.

9. A method for manufacturing an electrode, the method comprising manufacturing an electrode by using a niobium titanium oxide recovered by the recycling method according to any one of claims 5 to 8.

10. A method for manufacturing a battery, the method comprising: manufacturing an electrode by using a niobium titanium oxide recovered by the recycling method according to any one of claims 5 to 8; and
manufacturing the battery including the electrode.

11. The recycling system according to any one of claims 1 to 4, wherein the niobium titanium oxide comprises at least one selected from the group consisting of a niobium titanium oxide represented by a general formula LiₓTi_{1-y}M1_{y}Nb_{2-z}M2_{z}O_{7+δ} and a niobium titanium oxide represented by a general formula LiₓTi_{1-y}M3_{y+z}Nb_{2-z}O_{7-δ},
where the M1 is at least one selected from the group consisting of Zr, Si, and Sn, the M2 is at least one selected from the group consisting of V, Ta, and Bi, the M3 is at least one selected from the group consisting of Mg, Fe, Ni, Co, W, Ta, and Mo, the x satisfies 0 ≤ x ≤ 5, the y satisfies 0 ≤ y < 1, the z satisfies 0 ≤ z < 2, and the δ satisfies -0.3 ≤ δ ≤ 0.3.

12. A recycling method comprising:
applying (S11) a third heat treatment to a battery including a positive electrode and a negative electrode containing a niobium titanium oxide;
treating (S13) the battery with an acidic solvent;
separating (S14) the niobium titanium oxide from the battery treated with the acidic solvent; and
applying (S15) a first heat treatment to the separated niobium titanium oxide.

13. The recycling method according to claim 12, wherein the battery further includes a container member.

14. The recycling method according to any one of claims 12 to 13, further comprising, before the treating (S13) of the battery with the acidic solvent, pulverizing (S12) the battery subjected to the third heat treatment (S11).

15. The recycling method according to any one of claims 12 to 14, wherein the acidic solvent contains at least one of nitric acid or sulfuric acid.

16. A method for manufacturing an electrode, the method comprising manufacturing an electrode by using a niobium titanium oxide recovered by the recycling method according to any one of claims 12 to 15.

17. A method for manufacturing a battery, the method comprising: manufacturing an electrode by using a niobium titanium oxide recovered by the recycling method according to any one of claims 12 to 15; and
manufacturing a battery including the electrode.

18. A recycling system comprising:
a third heat treatment apparatus (10) configured to apply a third heat treatment to a battery including a positive electrode and a negative electrode containing a niobium titanium oxide;
an acid treatment apparatus (12) configured to treat the battery subjected to the third heat treatment with an acidic solvent;
a solid-liquid separation apparatus (2) configured to separate the niobium titanium oxide from the battery treated with the acidic solvent; and
a first heat treatment apparatus (3) configured to apply a first heat treatment to the separated niobium titanium oxide.
